# EUROPÄISCHE PATENTSCHRIFT

(11) **EP 1 820 714 B1**
(45) Veröffentlichungstag und Bekanntmachung des Hinweises auf die Patenterteilung: **16.05.2012**
(21) Anmeldenummer: 07100699.3
(22) Anmeldetag: 17.01.2007
(51) Int. Cl.: B62B 3/16, B65D 19/42

(54) **Transportroller**
Transport cart
Chariot de transport

(30) Priorität: 16.02.2006 CH 2482006
(43) Veröffentlichungstag der Anmeldung: 22.08.2007
(73) Patentinhaber: Georg Utz Holding AG, 5620 Bremgarten (CH)
(72) Erfinder: Dubois, Jean-Marc, 5620 Bremgarten (CH); Meili, Christoph, c/o Georg Utz Holding AG, 5620 Bremgarten (CH)
(74) Vertreter: Spierenburg, Pieter

(56) Entgegenhaltungen:
- GB-A- 904 198
- GB-A- 2 207 894
- US-B1- 6 257 152

## Beschreibung

Die Erfindung betrifft einen Transportroller nach dem Oberbegriff des Anspruchs 1.

Solche Transportroller sind allgemein bekannt und werden vorzugsweise zum Transport von quaderförmigen Behältern, Kisten oder stapelbaren Transportbehältern eingesetzt. Die Oberseite des Transportrollers dient dabei als Auflagefläche für das Transportgut. Seitlich der Auflagefläche angeordnete Gleitschutzleisten verhindern ein Verrutschen des Transportgutes, insbesondere eines quaderförmigen Transportbehälters. Die Transportroller weisen ein Aussenmass auf, das geringfügig grösser ist als das Aussenmass des auf den Transportroller platzierten Transportbehälters. Dadurch lassen sich die Transportroller platzsparend mit ihrem Transportgut längs- und querseitig ohne Abstand aneinander reihen. Um die leeren Transportroller einfacher zu transportieren, sind stapelbare Transportroller vorgeschlagen worden (siehe beispielsweise EP-A-0 675 829), bei welchen in der Auflagefläche kreisförmige Vertiefungen für die Aufnahme der Räder eines übergeordneten Transportrollers vorgesehen sind. Die Fortbewegung eines Stapels von mehreren übereinander gestapelten Transportrollern ist relativ problematisch, da einseitiger Druck auf einen Transportroller leicht die Räder aus den Vertiefungen drücken kann und damit der ganze Stapel auseinander fällt.

Die GB 2 207 894 zeigt einen Transportroller gemäß dem Oberbegriff des Anspruchs 1.

Es ist daher die Aufgabe der vorliegenden Erfindung, einen Transportroller zu schaffen, der zu einem stabilen und leicht handhabbaren Stapel stapelbar ist.

Diese Aufgabe wird von einem Transportroller mit den Merkmalen des Anspruchs 1 gelöst.

Die Grundidee dieser Lösung ist, einen Transportroller um im Wesentlichen 90° zu drehen, um diesen auf einen untenliegenden Transportroller zu stapeln. Dadurch sind die Lenkrollen ausserhalb des Trägerbodens des untenliegenden Transportrollers und man braucht auf ihre Stellung keine Rücksicht zu nehmen. Zweckmässige Ausgestaltungen der Erfindung gehen aus den Unteransprüchen hervor. Ein Ausführungsbeispiel des erfindungsgemässen Transportrollers wird anhand der Zeichnung erläutert.

Es zeigen:
- Fig. 1: eine perspektivische Darstellung eines offenen Rahmens eines Transport-rollers;
- Fig. 2: einen perspektivischen Teil-Ansicht des Rahmens mit einer Lenkrolle;
- Fig. 3: eine perspektivische Unteransicht des Transportrollers mit einer Lenkrolle;
- Fig. 4: eine Detailansicht der Befestigung der Lenkrolle;
- Fig. 5: eine Detailansicht einer ringförmigen Aufnahme für die Lenkrolle;
- Fig. 6: eine Obenansicht auf den offenen Rahmen;
- Fig. 7: eine Unteransicht auf den offenen Rahmen;
- Fig. 8: einen Stapel von drei aufeinander gestapelten Transportrollern in perspektivischer Darstellung;
- Fig. 9: den Stapel in der Figur 8 in einer Seitenansicht;
- Fig. 10: den Transportroller in Seitenansicht von der Schmalseite;
- Fig. 11: den Transportroller in Seitenansicht von der Längsseite;
- Fig. 12: zwei ineinander gestapelte Rahmen;
- Fig. 13: einen schmalen Anschlag in perspektivischer Untenansicht;
- Fig. 14: denselben Anschlag der Figur 13 in perspektivischer Draufsicht;
- Fig. 15: einen breiten Anschlag in perspektivischer Untenansicht; und
- Fig. 16: denselben Anschlag der Figur 15 in perspektivischer Draufsicht.

In den Figuren sind für dieselben Elemente jeweils die gleichen Bezugszeichen verwendet worden und erstmalige Erklärungen betreffen alle Figuren, wenn nicht ausdrücklich anders erwähnt.

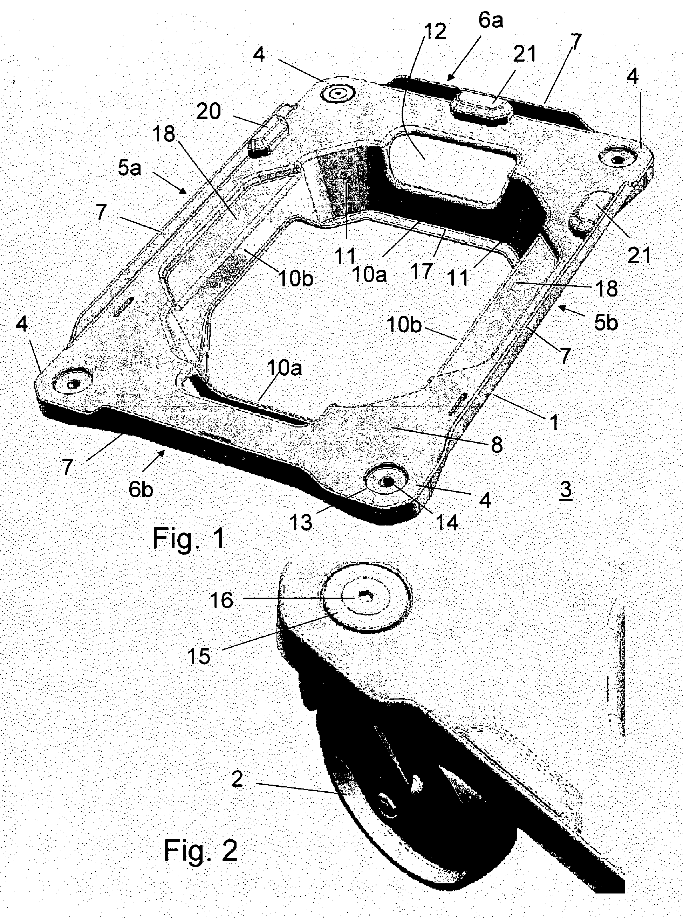

In der Figur 1 ist ein offener Rahmen 1 und in Figur 2 eine Teilansicht des offenen Rahmens 1 eines mit Lenkrollen 2 versehenen Transportrollers 3 gezeigt. In Figur 2 ist nur eine Lenkrolle 2 dargestellt, jedoch weist der Transportroller 3 vier Lenkrollen 2 auf, je eine an jeder Ecke 4 des Rahmens 1 angeordnet. Der Rahmen 1 weist zwei Längsseiten 5a und 5b und zwei Schmalseiten 6a und 6b auf. Entlang der Kanten der Längsseiten 5a und 5b und der Schmalseiten 6a und 6 sind als vorstehende Stege ausgebildete Gleitschutzeinrichtungen 7 vorgesehen, welche einen (nicht-dargestellten) quaderförmigen Behälter einschliessen. Der Rahmen 1 weist ferner eine von einem breiten umgehenden Rand gebildete Stellfläche 8 auf, die den Trägerboden des Transportrollers bildet. Innerhalb dieser Stellfläche 8 ist ein umlaufender, nach unten und leicht schräg nach innen gerichteter oder keilförmiger Rand 10 vorgesehen. Parallel zu den Schmalseiten 6a und 6b ist ein breiter Rand 10a und parallel zu den Längsseiten 5a und 5b ist ein schmaler Rand oder Steg 10b gestaltet. Der umlaufende, wannenförmige Rand 10 ist mit abgeschrägten Eckbereichen 11 versehen. Auf den Schmalseiten 6a und 6b sind zwischen dem Rand 10a und der umlaufenden Stellfläche 8 sattelförmige längliche Ausschnitte 12 vorgesehen, die Grifföffnungen bilden, um einen leeren Transportroller 3 mit einer Hand oder mit beiden Händen aufzunehmen. In den Ecken 4 sind kreisförmige tiefergelegte Träger 13 mit Bohrungen 14 vorgesehen, in welche eine Unterlagsscheibe 15 eingelegt und durch welche eine Inbusschraube 16 hindurchgestossen ist zur Befestigung der Lenkrolle 2 (siehe Figur 2). Die Ränder 10a und 10b sind mit einem parallel zur Stellfläche 8 ausgerichteten Falz 17 versehen. Auf den Längsseiten 5a und 5b sind je eine dem vorstehenden schmalen Rand 10b entsprechende Aufnahmen 18 vorgesehen, die als flache Einbuchtungen ausgebildet sind. Ferner sind ein schmaler Anschlag 20 und zwei breite Anschläge 21 in Figur 1 ersichtlich.

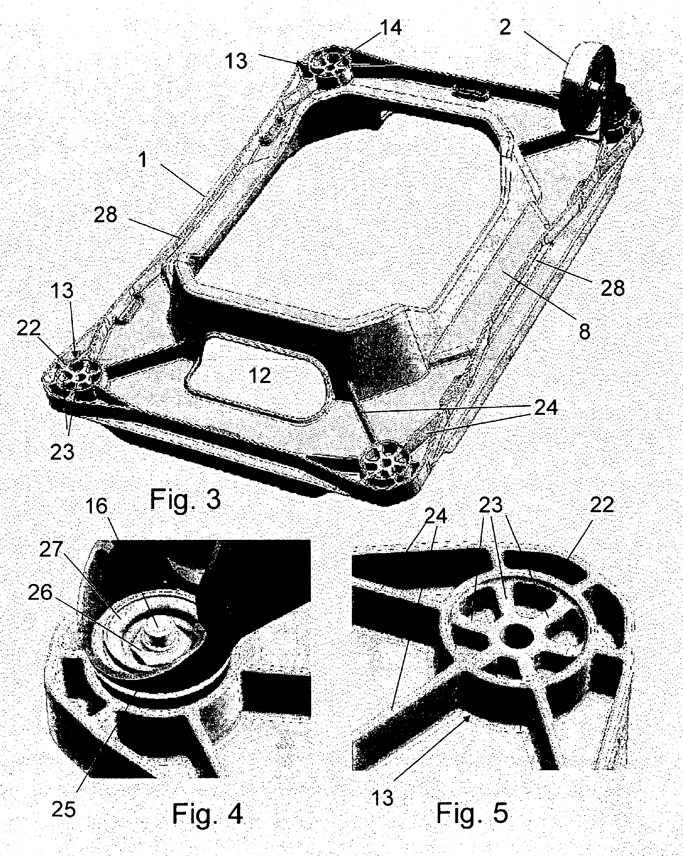

Die Figur 3 zeigt den Rahmen 1 von der Unterseite. Deutlich sind die kreisförmigen Träger 13 mit der Bohrung 14 ersichtlich, welche als Rohrstück 22 mit sechs strahlenförmigen Verstärkungsrippen 23 ausgebildet sind. Von diesen Trägern 13 gehen strahlförmige Verstärkungsrippen 24 aus, die der Stellfläche 8 eine verdrehungssteife Stabilität geben. Ferner sind beiderseits der Längsseiten 5a und 5b taillierte Verstärkungsrippen 28 vorgesehen.

Die Figur 4 zeigt ein Detail der Befestigung der Lenkrolle 2 mit einem Teil eines Auslegers 25, die mittels der Inbusschraube 16, einer Mutter 26 und einer tellerförmigen Unterlagsscheibe 27 am Rahmen 1 drehbar befestigt ist.

Die Figur 5 zeigt der Träger 13 mit dem Rohrstück 22 und den sechs strahlenförmigen Verstärkungsrippen 23 in Detail, wobei deutlich zu sehen ist, dass die strahlenförmigen Verstärkungsrippen 24 gleich hoch ausgebildet sind wie das Rohrstück 22 und in der Verlängerung der etwas tiefer liegenden Verstärkungsrippen 23 angeordnet sind.

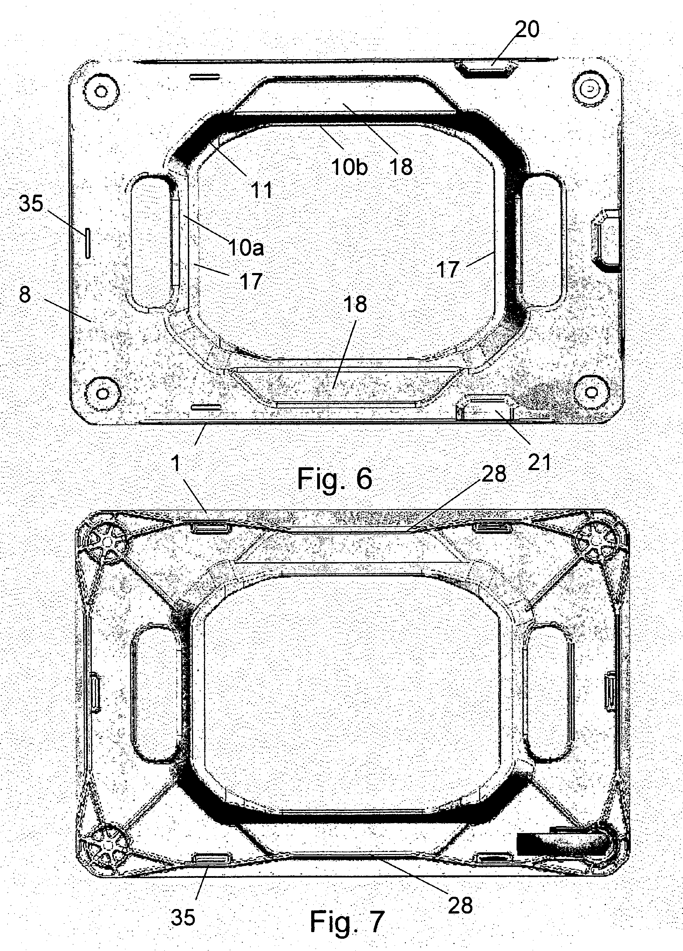

Die Figuren 6 und 7 zeigen den Rahmen 1 in Draufsicht bzw. in Unteransicht, wobei deutlich die abgeschrägten Eckbereiche 11 erkennbar sind, welche einen Winkel von 45° mit den breiten Rändern 10a und ebenfalls mit den schmalen Rändern 10b bilden. Die Aufnahmen 18 sind komplementär zu den schmalen Rändern 10b mit ihren Eckbereichen 11 ausgestaltet. Ferner sind Schlitze 35 in der Stellfläche 8 ersichtlich, die für die Befestigung der Anschläge 20 und 21 vorgesehen sind.

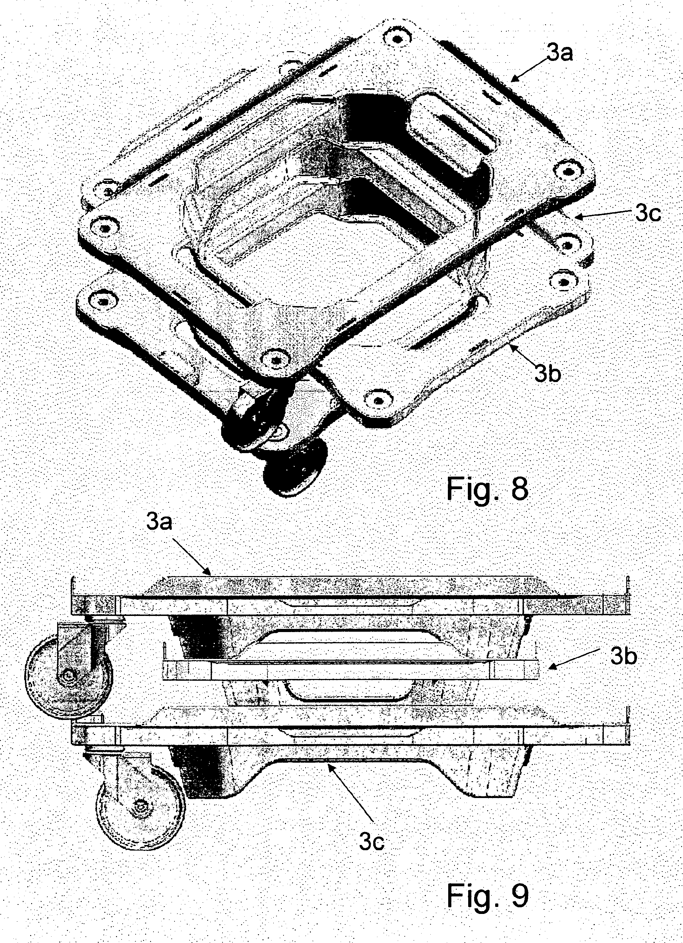

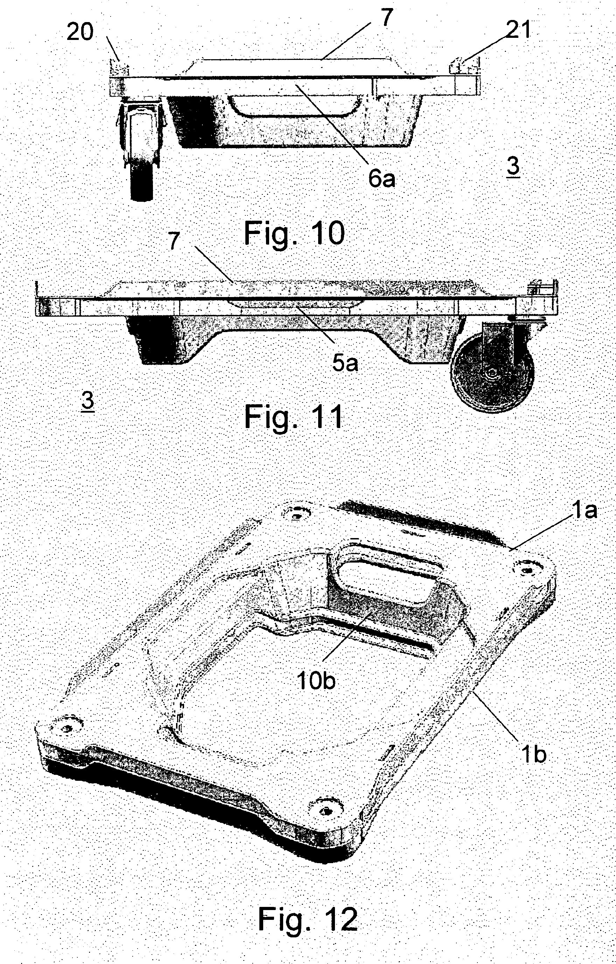

In den Figuren 8 und 9 ist ein Stapel von drei aufeinander geschichteten Transportrollern 3a, 3b und 3c dargestellt. Der mittlere Transportroller 3b ist nun gegenüber dem untenliegenden Transportroller 3b um 90° gedreht, so dass die Ränder 6a und 6b des Transportrollers 3b in die Aufnahmen 18 des Transportrollers 3a eingreifen. Ebenso ist der obere Transportroller 3c wiederum um 90° gegenüber dem darunter liegenden Transportroller 3b gedreht. In den Figuren 10 und 11 ist der Transportroller 3 in einer Seitenansicht von der schmalen Seite bzw. in einer Seitenansicht von der breiten Seite gezeigt.

In Figur 12 ist nun ein Stapel von zwei Rahmen 1a und 1b ohne montierte Lenkrollen gezeigt. Aufgrund der nach innen leicht schrägen oder keilförmigen Anordnung der schmalen Ränder 10b, der abgeschrägten Eckbereiche 11 und der breiten Ränder 10a können die Rahmen 1a und 1b platzsparend ineinander verschachtelt werden.

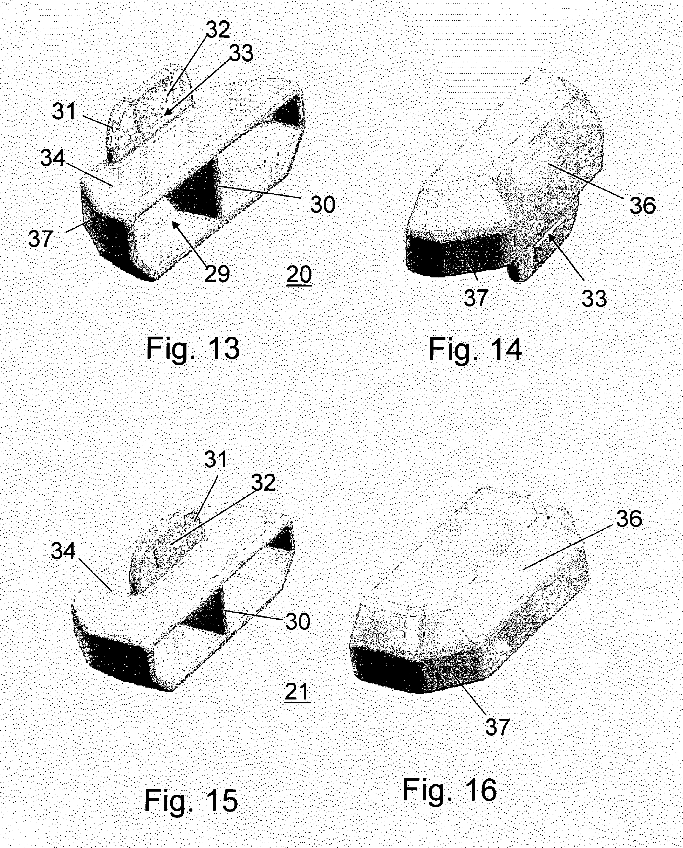

Die Figuren 13 und 14 zeigen einen schmalen Anschlag 20 von unten bzw. von oben. Wie ersichtlich weist der Anschlag 20 eine offene Kammer 29 mit einer mittigen Verstärkungswand 30 und eine Nase 31 mit einem leicht gegenüber der Nase 31 vorstehenden Rastmittel 32 auf. Der Abstand zwischen der Kante 33 des Rastmittels 32 und der Oberfläche 34 der Nase 31 entspricht genau der Wandstärke des Rahmens 1 im Bereich der zugehörigen Schlitze 35 in der Stellfläche 8. In den Figuren 15 und 16 ist ein breiter Anschlag 21 von unten bzw. von oben dargestellt. Wie ersichtlich ist die Nase 31 mit einer Anfasung 36 versehen und an ihren Endbereichen 37 angeschrägt ausgebildet.

Es versteht sich, dass zwei Lenkrollen 2 auch durch zwei feste Rollen ersetzt werden können, die in Längsrichtung des Rahmens 1 ausgerichtet sind. In einer bevorzugten Ausführung ist der Rahmen 1 und sind die Lenkrollen 2 mit ihren Auslegern 25 aus einem geeigneten harten Kunststoffmaterial hergestellt, insbesondere aus Polystyrol wie beispielsweise Acryl-Butadien-Styrol (ABS). Auch die Inbusschrauben, die Muttern und die Unterlagsscheiben können aus diesem Material hergestellt sein. Die Anschläge 20 und 21 können aus einem harten Kunststoffmaterial wie Polypropylen (PP) hergestellt sein.

## Patentansprüche

1. Transportroller (3), insbesondere zum Fortbewegen eines Transportbehälters, mit einem auf Lenkrollen (2) bewegbaren, im Wesentlichen rechteckigen Trägerboden (8) mit Gleitschutzeinrichtungen (7), welcher der Aufnahme des Transportbehälters dient, **dadurch gekennzeichnet, dass** der Trägerboden (8) von einem offenen Rahmen (1) gebildet ist, der zumindest auf den Schmalseiten (6a, 6b) je einen inneren, nach unten vorstehenden Rand (10a) aufweist, und auf den Längsseiten (5a, 5b) des Rahmens (1) den Rändern entsprechende Aufnahmen (18) vorgesehen sind, derart, dass die inneren Ränder (10a) eines übergeordneten, im Wesentlichen um 90° gedrehten Transportrollers (3) in die Aufnahmen (18) des Transportrollers (3) hineinpassen, um einen Stapel zu bilden.

2. Transportroller nach Anspruch 1, **dadurch gekennzeichnet, dass** die inneren Ränder (10a) keilförmig ausgebildet sind, um übereinander angeordnete Trägerböden (8) zu verschachteln.

3. Transportroller nach Anspruch 1 oder 2, **dadurch gekennzeichnet, dass** die Endbereiche (11) der Ränder (10a) von je einer Abschrägung gebildet sind.

4. Transportroller nach einem der Ansprüche 1 bis 3, **dadurch gekennzeichnet, dass** die Ränder (10a) mit einem parallel zum Trägerboden gebildeten Falz (17) versehen sind.

5. Transportroller nach einem der Ansprüche 1 bis 4, **dadurch gekennzeichnet, dass** die Ränder (10a) mittels vorstehender Stege (10b) längs den Längsseiten (5a, 5b) miteinander verbunden sind.

6. Transportroller nach einem der Ansprüche 1 bis 5, **dadurch gekennzeichnet, dass** der Rahmen (1) auf der Unterseite mit Verstärkungsrippen (23, 24) versehen ist, welche strahlenförmig von Befestigungen (13) der Lenkrollen (2) wegführen.

7. Transportroller nach einem der Ansprüche 1 bis 6, **dadurch gekennzeichnet, dass** zwischen den vorstehenden Rändern und den Aussenrändern der kurzen Seiten längliche Grifföffnungen (12) vorgesehen sind.

8. Transportroller nach einem der Ansprüche 1 bis 7, **dadurch gekennzeichnet, dass** die Lenkrollen (2) einen Ausleger (25) mit einer zentralen Bohrung aufweisen, um den Ausleger (25) mittels Schraube (16) und Mutter (26) drehbar an den Eckbereichen (4) des Rahmens zu befestigen.

9. Transportroller nach Anspruch 8, **dadurch gekennzeichnet, dass** jeder Eckbereich (4) eine als Rohrstück (22) ausgebildete Aufnahme für den Ausleger (25) aufweist, die strahlenförmig angeordnete Verstärkungsrippen (24) aufweist.

10. Transportroller nach einem der Ansprüche 1 bis 9, **dadurch gekennzeichnet, dass** austauschbare Anschläge (20, 21) vorgesehen sind, welche eine Nase (31) mit einem Rastmittel (32) aufweisen, die in entsprechend im Rahmen (1) ausgeformte Schlitze (35) einsetzbar sind.

11. Transportroller nach einem der Ansprüche 1 bis 10, **dadurch gekennzeichnet, dass** sämtliche Teile aus einem geeigneten Kunststoffmaterial hergestellt sind.

## Claims

1. A transport cart (3), especially for moving a transport container, comprising a substantially rectangular support base (8) with slip protection devices (7), which support base is movable on castors (2) and which is used for accommodating the transport container, **characterized in that** the support base (8) is formed by an open frame (1), which at least on the narrow sides (6a, 6b) respectively comprises an inner downwardly protruding edge (10a), and respective receivers (18) corresponding to the edges are provided on the longitudinal sides (5a, 5b) of the frame (1), such that the inner edges (10a) of a superimposed transport cart (3) which is substantially twisted by 90° fit into the receivers (18) of the transport cart (3) in order to form a stack.

2. A transport cart according to claim 1, **characterized in that** the inner edges (10a) are arranged in the manner of a wedge in order to interlace support bases (8) which are stacked above one another.

3. A transport cart according to claim 1 or 2, **characterized in that** the end regions (11) of the edges (10a) are formed by a respective bevelled portion.

4. A transport cart according to one of the claims 1 to 3, **characterized in that** the edges (10a) are provided with a fold (17) formed parallel to the support base.

5. A transport cart according to one of the claims 1 to 4, **characterized in that** the edges (10a) are connected to each other by means of protruding webs (10b) along the longitudinal sides (5a, 5b).

6. A transport cart according to one of the claims 1 to 5, **characterized in that** the frame (1) is provided on the bottom side with reinforcing ribs (23, 24) which lead away radially from fixtures (13) of the castors (2).

7. A transport cart according to one of the claims 1 to 6, **characterized in that** elongated handle openings (12) are provided between the protruding edges and the outside edges of the short sides.

8. A transport cart according to one of the claims 1 to 7, **characterized in that** the castors (2) comprise an extension arm (25) with a central bore in order to rotatably fix the extension arm (25) by means of the screw (16) and nut (26) to the corner regions (4) of the frame.

9. A transport cart according to claim 8, **characterized in that** each corner region (4) comprises a receiver arranged as a tube section (22) for the extension arm (25), which receiver comprises radially arranged reinforcing ribs (24).

10. A transport cart according to one of the claims 1 to 9, **characterized in that** exchangeable stops (20, 21) are provided which comprise a nose (31) with a snap-in means (32) which can be inserted into slits (35) respectively formed in the frame (1).

11. A transport cart according to one of the claims 1 to 10, **characterized in that** all parts are made of a suitable plastic material.

## Revendications

1. Chariot de transport (3), en particulier pour déplacer un récipient de transport, avec un fond portant (8) sensiblement rectangulaire et mobile sur des roulettes de guidage (2) muni de dispositifs antidérapants (7), qui sert à recevoir le récipient de transport, **caractérisé en ce que** le fond portant (8) est formé par un cadre (1) ouvert qui présente au moins sur chacun des petits côtés (6a, 6b) un bord intérieur (10a) dépassant vers le bas et des logements (18) correspondant aux bords sont prévus sur les côtés longitudinaux (5a, 5b) du cadre (1), de telle manière que les bords intérieurs (10a) d'un chariot de transport (3) situé par-dessus, tourné sensiblement de 90°, s'adaptent dans les logements (18) du chariot de transport (3) pour former une pile.

2. Chariot de transport selon la revendication 1, **caractérisé en ce que** les bords intérieurs (10a) sont en forme de coin afin d'emboîter des fonds portants (8) disposés les uns par-dessus les autres.

3. Chariot de transport selon la revendication 1 ou 2, **caractérisé en ce que** les parties d'extrémité (11) des bords (10a) sont formées chacune par un biseau.

4. Chariot de transport selon l'une des revendications 1 à 3, **caractérisé en ce que** les bords (10a) sont munis d'un pli (17) formé parallèlement au fond portant.

5. Chariot de transport selon l'une des revendications 1 à 4, **caractérisé en ce que** les bords (10a) sont reliés entre eux au moyen de barrettes (10b) en saillie le long des côtés longitudinaux (5a, 5b).

6. Chariot de transport selon l'une des revendications 1 à 5, **caractérisé en ce que** le cadre (1) est muni sur sa face inférieure de nervures de renfort (23, 24) qui s'écartent en rayonnant à partir de fixations (13) des roulettes de guidage (2).

7. Chariot de transport selon l'une des revendications 1 à 6, **caractérisé en ce que** des ouvertures de prise (12) allongées sont prévues entre les bords en saillie et les bords extérieurs des petits côtés.

8. Chariot de transport selon l'une des revendications 1 à 7, **caractérisé en ce que** les roulettes de guidage (2) présentent un bras (25) avec un alésage central pour fixer le bras (25) au moyen d'une vis (16) et d'un écrou (26) de manière pivotante sur les parties d'angle (4) du cadre.

9. Chariot de transport selon la revendication 8, **caractérisé en ce que** chaque partie d'angle (4) présente un iogement pour le bras (25) conformé comme un tronçon de tube (22) qui présente des nervures de renfort (24) rayonnantes.

10. Chariot de transport selon l'une des revendications 1 à 9, **caractérisé en ce que** sont prévues des butées interchangeables (20, 21) qui présentent un ergot (31) avec un moyen d'emboîtement (32) qui peut être introduit dans des fentes (35) correspondantes formées dans le cadre (1).

11. Chariot de transport selon l'une des revendications 1 à 10, **caractérisé en ce que** toutes les pièces sont fabriquées dans une matière plastique appropriée.
